# EUROPEAN PATENT APPLICATION

(11) **EP 4 791 025 A1**
(43) Date of publication of application: **12.08.2026**
(21) Application number: 25226939.4
(22) Date of filing: 23.12.2025
(51) Int. Cl.: H04R 1/08, F16M 11/04

(54) **A MICROPHONE SUSPENSION DEVICE**

(71) Applicant: Bubblebee Industries, SIA, 3708 Auce Dobeles nov. (LV)
(72) Inventor: Murnieks, Toms, LV-3078 Auce (LV); Mejer Johansen, Poul, LV-3708 Auce (LV)
(74) Representative: Kromanis, Artis

(57) **Abstract**

The present invention is a microphone suspension device (2) comprising a set of two microphone holders (5). Each microphone holder (5) comprises a base (9), two curved arms (11) extending from the base (9) and a microphone receiver (12) attached to the curved arms (11). A plane (35) along which the one curved arm (11) is curved is at a wide angle (13) in relation to a plane (35) along which the second curved arm (11) of the same one microphone holder (5) is curved. The plane (35) along which the one curved arm (11) is curved is at an acute angle (14) in relation to the plane (35) along which the second curved arm (11) of the adjacent microphone holder (5) is curved. The microphone suspension device (2) further comprises a gripper (6) arranged between the two microphone receivers (12) of the two microphone holders (5).

## Description

### Field of the invention

The present invention relates to microphone suspension assemblies.

### Background of the invention

It is a well-established principle that acoustic energy propagates through a medium, such as air, as transient variations in ambient pressure. A conventional microphone transducer is configured to detect these pressure fluctuations and convert them into a corresponding electrical signal. In the ideal theoretical model of microphone operation, it is typically presumed that the only mechanical forces sensed by the transducer are those induced by the desired acoustic pressure changes from the sound source. Furthermore, it is generally assumed that the microphone housing and associated structure remain in a truly static state. In practical application, however, these conditions are seldom perfectly realized. External mechanical influences, such as translational or rotational movement of the microphone assembly, induce inertial forces and/or vibrational energy which are coupled to the transducer element. These extraneous influences may generate an undesired electrical signal (noise) that is wholly uncorrelated with the pressure changes originating from the intended sound source. Consequently, substantial effort must be directed toward mitigating the effect of these external influences to ensure the fidelity of the acquired acoustic signal.

First efforts to try to mitigate aforementioned problems are disclosed in the UK patent application publication No. GB2085263. Further efforts have been made as disclosed in the European patent publication No. EP1985153 which describes a suspension device comprising a frame and a means for holding a microphone or a gripper, wherein the means for holding a microphone is secured to the frame by two arms lying in a plane and wherein the arms are shaped to allow movement of the means for holding a microphone in a direction transverse to the plane.

However, any movement of a suspension device does not ensure stability of a microphone to be held. Hence, a solution shall be found to overcome no stability problems in combination with additional aforementioned problems.

### Summary of the invention

The present invention is a microphone suspension device comprises a set of two microphone holders, a gripper arranged there between. Each microphone holder comprises a base, two curved arms extending from the base and a microphone receiver attached to the curved arms. The two curved arms have a first and a second end, wherein the first ends of the curved arms merge with the bases and the second ends of the curved arms merge with the microphone receiver. Each curved arm is curved along one common plane. And a plane along which the one curved arm is curved is at a wide angle in relation to a plane along which the second curved arm of the same one microphone holder is curved. Each arm is curved in one direction, especially only in one direction. Moreover, the plane along which the one curved arm is curved is at an acute angle in relation to the plane along which the second curved arm of the adjacent microphone holder is curved. In other words, the acute angle is between the planes of curved arms arranged on one side of the microphone suspension device, and the same is for the planes of curved arms arranged on another side of the microphone suspension device. The gripper is arranged between the two microphone receivers of the two microphone holders.

In one embodiment of the invention, the gripper comprises an intermediate annular cylinder and an inner annular cylinder. The inner concentric annular cylinder covers the microphone receiver of both microphone holders so that receivable and holdable microphone is in contact with the inner annular cylinder of the gripper. Each cylinder has a gripper cut-out for reception of the microphone there through. Moreover, the axis of the inner annular cylinder and the intermediate annular cylinder may be concentric to each other.

The inner annular cylinder has a length which is measured in a direction of the centre axis of the inner annular cylinder. The length of the inner annular cylinder improves the stability of the microphone against downward deflection in cases when a shorter microphone is held by a single microphone suspension device. This length of the inner annular cylinder may be in a range of 5 mm to 25 mm.

In another embodiment, the gripper may further comprise an outer annular cylinder extending from the inner annular cylinder of the gripper. Moreover, the axis of the inner annular cylinder, the intermediate annular cylinder and the outer annular cylinder may be concentric to each other.

The gripper is made of a rubber or plastic material of low shore hardness in a range of 20A shore to 70A shore.

The base and arms of the microphone receiver and the gripper may be made of plastic, plastic elastomer or similar material that retains elastic deformation and rapid recovery.

The wide angle is in a range of 170 to 92 degrees, 170 to 100 degrees, 170 to 120 degrees, 160 to 140 degrees and 155 to 145 degrees.

The acute angle is in a range of 88 to 10 degrees, 80 to 10 degrees, 60 to 10 degrees, 40 to 20 degrees and 35 to 25 degrees.

The wide angle and the acute angle at which the curved arms are placed also increase the stability of the microphone held by the device. Both the downward deflection is reduced when the microphone is held by a single suspension device and also overall free motion of the device or assembly is reduced.

The device further comprises a threaded insert arranged between the two bases of the two microphone holders so that the two bases of the two microphone holders enclose the threaded insert. In one embodiment of the invention the threaded insert can be a square nut.

It should be noted that a cross section of the curved arm may change along its path from an irregular five-sided polygon at the end of the path that intersects with the base of the microphone holder to an oval profile that merges with the microphone receiver.

Moreover, the base, two curved arms and the microphone receiver are an integral part. Basically the microphone holder is an integral part. Additionally, the set of two microphone holders can be made as one integral part.

The microphone receiver is in a form of a ring having a ring cut-out. The cut out forms the interrupted ring-shaped microphone receiver having a first and a second end of the ring. One end of the ring is attached to the one arm of the microphone holder and another end of the ring is attached to another arm of the same microphone holder. The gripper cut-out coincides with the ring cut out of a microphone receiver so that the microphone can be mounted in the microphone suspension device.

Another embodiment of the invention is a microphone suspension assembly comprising at least two aforementioned microphone suspension devices and the microphone arranged on at least two microphone suspension devices.

### Brief description of the drawings

The drawings illustrate through examples embodiments of the invention falling within the scope of the invention as defined by the claims.
Fig. 1 is a perspective view of a microphone suspension assembly (1) comprising one microphone suspension device (2) and a microphone (4) mounted in the microphone suspension devices (2).
Fig. 2 is a front perspective view of the microphone suspension device (2) as seen in Fig. 1.
Fig. 3 is bottom perspective view of the microphone suspension device (2) as seen in Fig. 1 and 2.
Fig. 4 is an exploded view of the microphone suspension device (2) as seen in Figs. 1 to 3.
Fig. 5A is bottom view of one microphone holder (5) of the microphone suspension device (2) as seen in Figs. 1 to 4 illustrating a plane (35) along which the one curved arm (11) is curved is at a wide angle (13) to a plane (35) along which the second curved arm (11) is curved.
Fig. 5B is top view of two microphone holders (5) of the microphone suspension device (2) as seen in Figs. 1 to 4 illustrating the plane (35) along which the one curved arm (11) of one microphone holders (5) is curved is at an acute angle (14) to the plane along which the another curved arm (11) of second adjacent microphone holder (5) is curved.
Fig. 6 is a perspective view of a microphone suspension assembly (1) comprising two microphone suspension devices (2) and a microphone (4) mounted in the two microphone suspension devices (2)
Fig. 7 is a side view of the microphone suspension assembly (1) as seen in Fig. 6.
Fig. 8 is a cross-section view along line A-A as seen in Fig. 7.
Fig. 9 is an enlarged view of a section A from Fig. 8 illustrating attachment of the microphone suspension device (2) to the rail (3) as seen in Fig. 7 and 8.
Fig. 10 is another embodiment illustrating attachment of the microphone suspension device (2) to the rail (3).
Fig. 11 is yet another embodiment illustrating attachment of the microphone suspension device (2) to a fixture (17).
Fig. 12 is an enlarged view of a section A-A from Fig. 7 excluding everything except the base (9) of the microphone holders (5).
Fig. 13 is a front view of a gripper (6).
Fig. 14 is a cross-section view of the gripper (6) along line B-B as seen in Fig. 13.
Fig. 15 illustrates changes of cross-sections of the arm (11) along its curved path (36).

### Detailed description of the embodiments

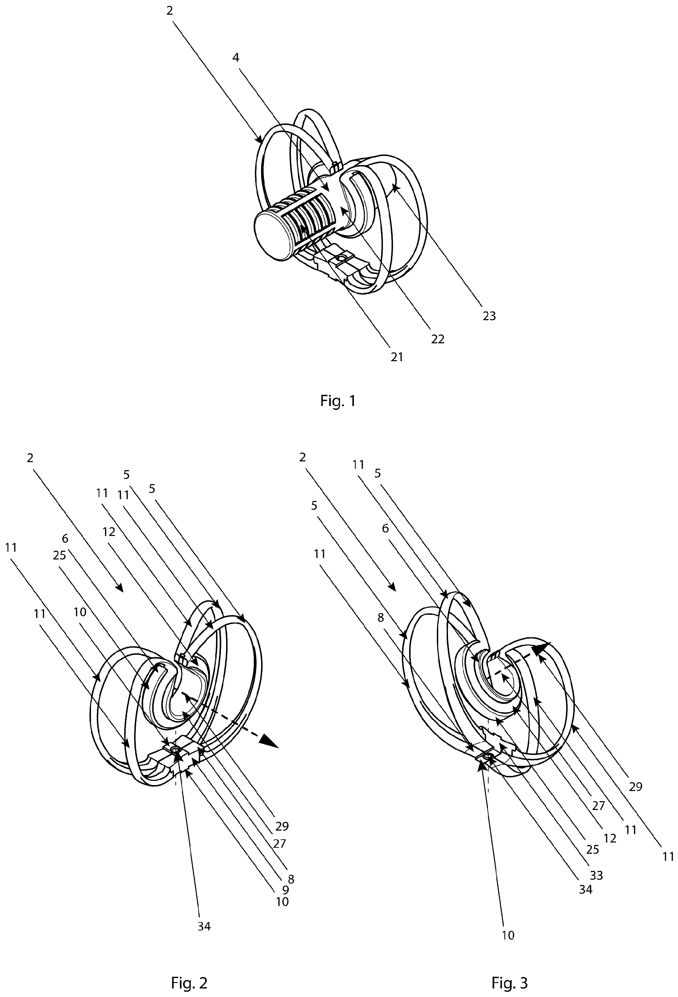

Fig. 1 is a perspective view of a microphone suspension assembly (1) comprising one microphone suspension device (2) and a microphone (4) mounted in the microphone suspension devices (2). The microphone (4) consists of the following main elements: a microphone capsule (22), a protective metal mesh (21) and a connector (23).

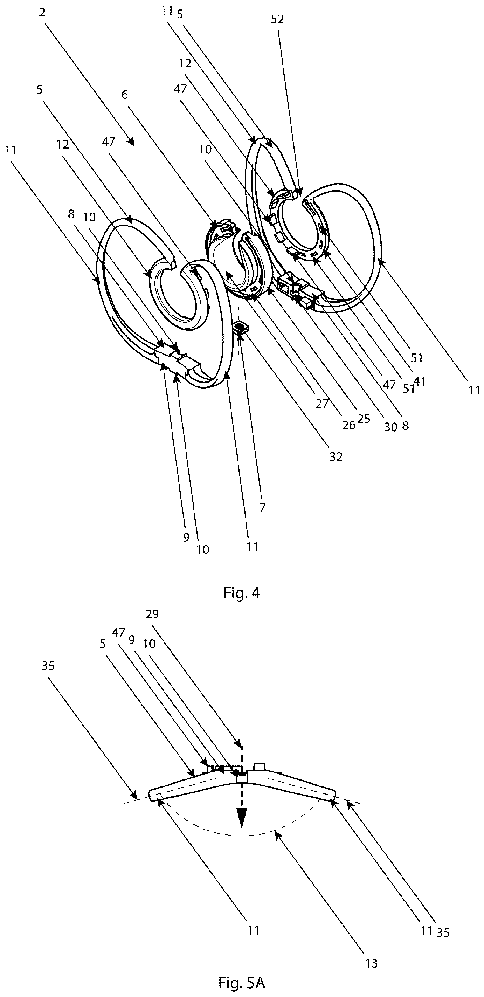

Fig. 2 is a front perspective view of the microphone suspension device (2) as seen in Fig. 1, but with removed microphone (4). Fig. 3 is bottom perspective view of the microphone suspension device (2) as seen in Fig. 2. The microphone suspension device (2) comprises a set of two microphone holders (5). Each microphone holder (5) comprises a base (9), two curved arms (11) extending from the base (9) and a microphone receiver (12) at the ends of the curved arms (11). The base (9) comprises a sliding tab (10). One sliding tab (10) is arranged on an upper surface of the base (9) and another sliding tab (10) is arranged on a lower surface of the base (9). The upper surface of the base (9) is arranged towards the microphone receiver (12) of the microphone suspension device (2) and comprises a flat surface (8). Between the flat surfaces (8) an outer surface (33) of a base is arranged. In a base (8) of each microphone holder (5) a half hole is formed, which form a hole (34) when both microphone holders (5) are connected together. The microphone suspension device (2) comprises a gripper (6) which is arranged between the two microphone receivers (12) of the two microphone holders (5). The gripper (6) comprises an outer annular cylinder (25), an intermediate annular cylinder (26) and an inner annular cylinder (27). All three cylinders (25; 26; 27) are concentric to each other with the common centre line, which is a longitudinal axis (29) of microphone to be placed into the microphone holder (5). The inner concentric annular cylinder (27) covers the microphone receivers (12) of both assembled microphone holders (5) so that receivable and holdable microphone (4) is in contact with the inner annular cylinder (27) of the gripper (6). All three cylinder (26; 27; 28) of the gripper (6) have a gripper cut-out (28) for reception of the microphone (4) there through. This gripper cut-out (28) coincides with the ring cut out (52, see Fig. 4) of the microphone receiver (12) so that the holdable microphone (4) can be inserted into the microphone receiver (12) and all three cylinders (26; 27; 28) of the gripper (6).

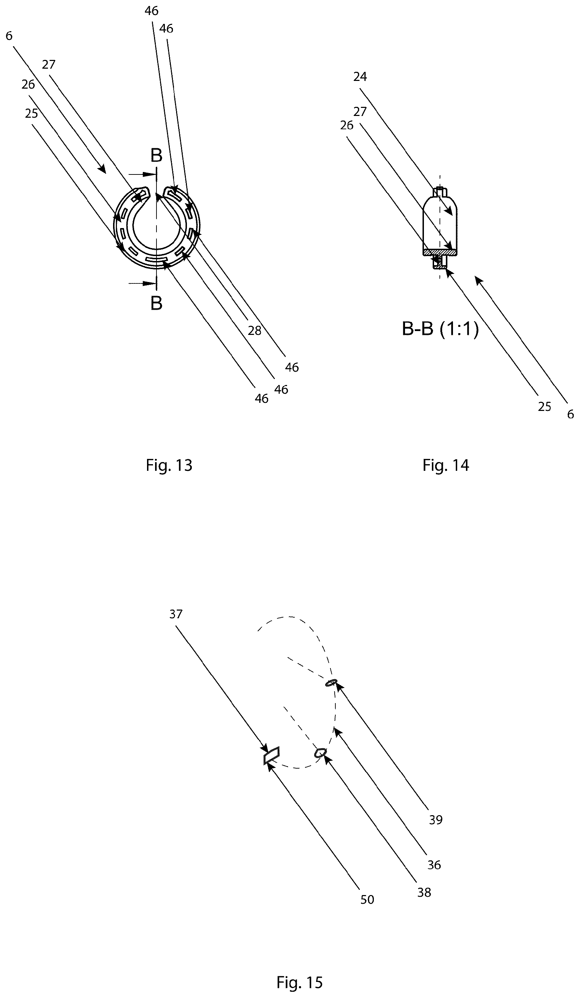

Fig. 4 is an exploded view of the microphone suspension device (2) as seen in Figs. 1 to 3 illustrating in more detail the gripper (6), as well as the base (9). The microphone suspension device (2) comprises a threaded insert (7) arranged between the two bases (9) of the two microphone holders (5) so that the two bases (9) of the two microphone holders (5) enclose the threaded insert (7). For this reason a slot (30) has been made in the base (9) where the threaded insert (7) can be positioned. The threaded insert (7) comprises a treaded hole (32). In the present embodiment, the threaded insert (7) is a threaded nut. The microphone receiver (12) on its flat surface (41) comprises pegs (47) and slots (51) for maintaining a connection between two microphone holders (5) The pegs (47) of the microphone receiver (12) of one microphone holder (5) are inserted into the slots (51) of the microphone receiver (12) of another microphone holder (5) forming the secure pair of microphone holders (5). The intermediate cylinder (26) of the gripper (6) comprises holes (46, see Fig. 13) through which protrudes the pegs (47) of the microphone receiver (12) of one microphone holder (5) and into the slots (51) of the microphone receiver (12) of another microphone holder (5). This further secures the gripper (6) to the microphone holders (5).

Fig. 5A is bottom view of one microphone holder (5) of the microphone suspension device (2) as seen in Figs. 1 to 4. The curved arms (11) are curved along one common plane (35). The plane (35) along which the one curved arm (11) is curved is at a wide angle (13) in relation to a plane (35) along which the second curved arm (11) of the same one microphone holder (5) is curved. In the present embodiment the wide angle (13) is 150 degrees.

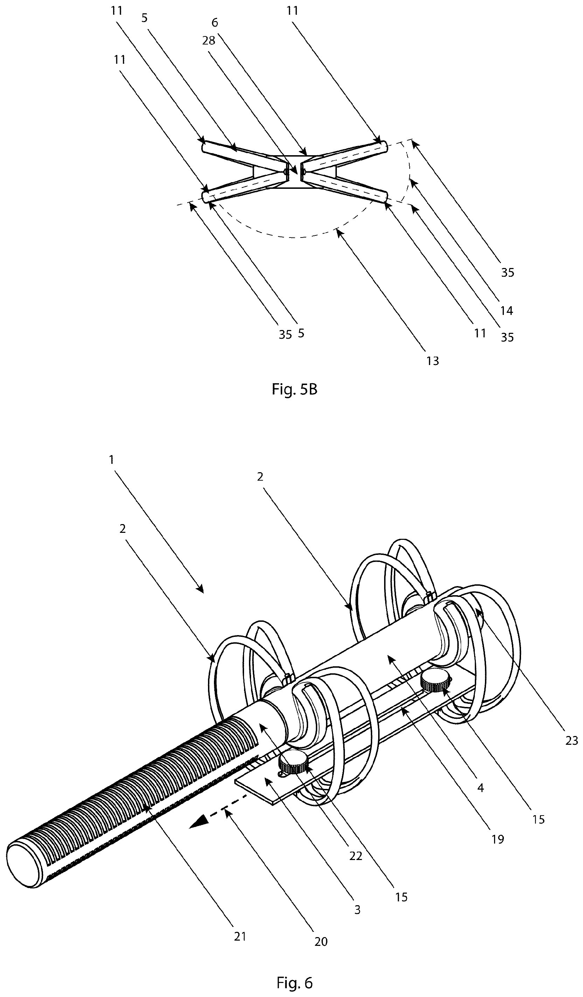

Fig. 5B is top view of two microphone holders (5) of the microphone suspension device (2) as seen in Figs. 1 to 4. The plane (35) along which the one curved arm (11) of one of microphone holders (5) is curved is at an acute angle (14) to the plane (35) along which another curved arm (11) of second adjacent microphone holder (5) is curved. In the present embodiment the acute angle (14) is 30 degrees.

The wide angle (13) and the acute angle (14) at which the planes (35) of the curved arms (11) are placed also increase the stability of the microphone (4) held by the microphone suspension device (2). Both the downward deflection is reduced when the microphone (4) is held by a single microphone suspension device (2) and also overall free motion of the microphone suspension device (2) or microphone suspension assembly (1, see Fig. 6) is reduced.

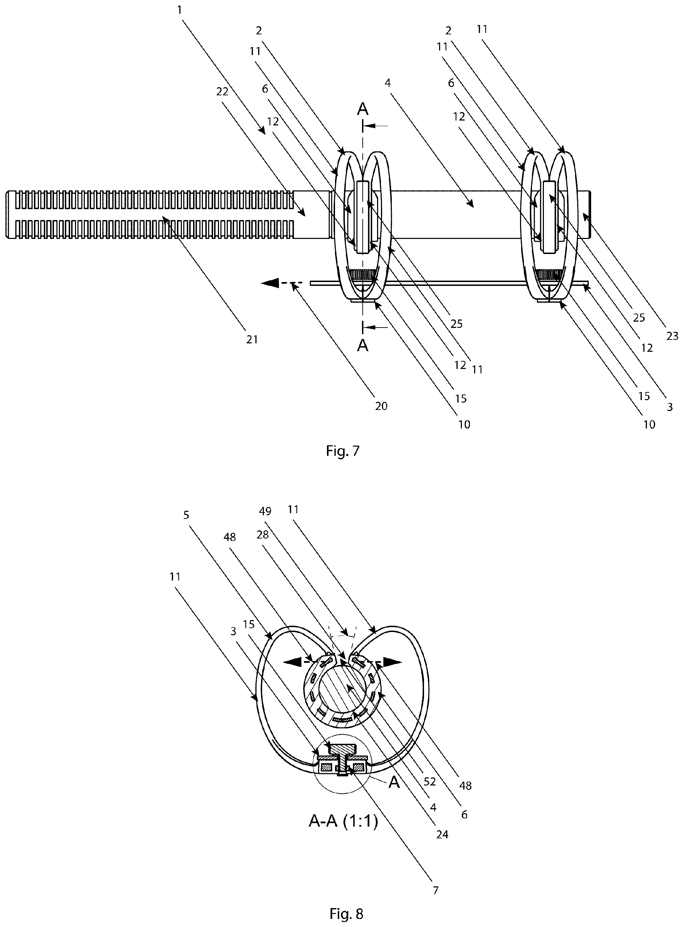

Fig. 6 is a perspective view of a microphone suspension assembly (1) comprising two microphone suspension devices (2) and a microphone (4) mounted in the two microphone suspension devices (2). Fig. 7 is a side view of the microphone suspension assembly (1) as seen in Fig. 6. Both microphone suspension devices (2) are mounted onto a rail (3). The rail (3) comprises a rail slot (19) through which thumb screws (15) may be inserted in order to fix both microphone suspension devices (2) to the rail (3). Moreover the rail slot (19) extends along the rail (30) so that the distance between two microphone suspension devices (2) is adjustable positioning the microphone suspension devices (2) along the longitudinal axis (20) of the rail (3).

Fig. 8 is a cross-section view along line A-A as seen in Fig. 7. The Fig. 8 illustrates position of the thumb screw (15) through the rail (3) into the treaded insert (7) located within the base (9). The Fig. 8 also illustrates a position of the microphone (4) within the microphone receiver (12). Most of the microphone (4) is engaged with the microphone receiver (12) forming a microphone contact surface (24). The microphone (4) can be inserted within the microphone receiver (12) through the gripper cut-out (28) of the gripper (6) and a ring cut-out (52) of the microphone receiver (12). The cut-out (28) of the gripper (6) and the ring cut-out (52) of the microphone receiver (12) form an opening angle (49). The microphone holder (5) is made of plastic material so that both curved arms (11) may be pulled in a general direction (48) perpendicular to the longitudinal axis (20) of a rail (3) to ease the insertion of the microphone (4).

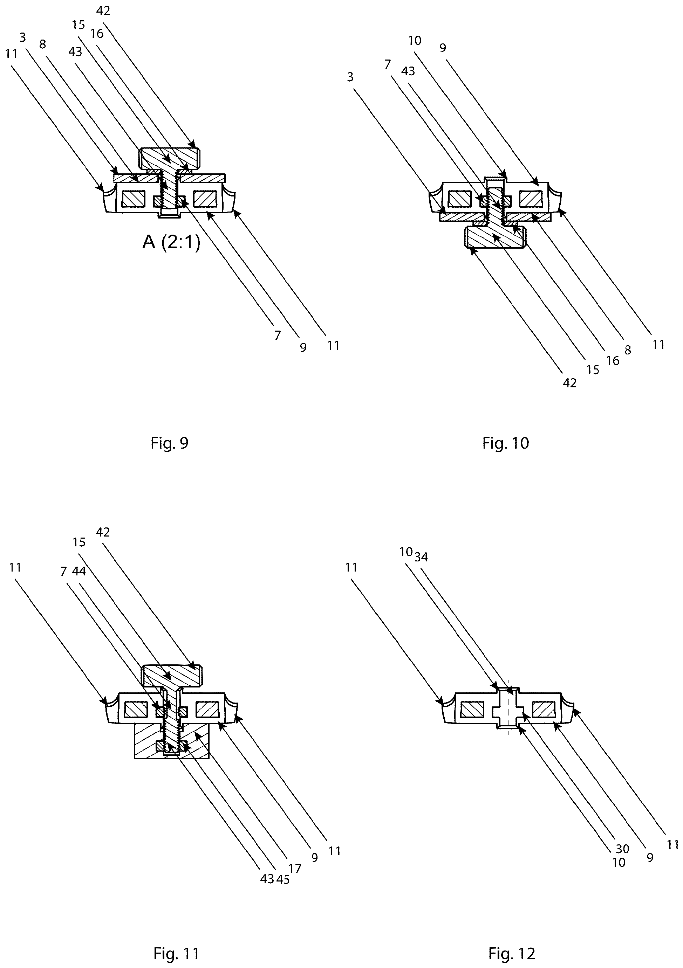

Figs. 9 to 11 illustrate various types of attachments of the base (9) of the microphone suspension device (2) to the rail (3) or a fixture (17). Fig. 9 is an enlarged view of a section A-A from Fig. 8 illustrating attachment of the microphone suspension device (2) to the rail (3) as seen in Fig. 7 and 8. The attachment is provided through the base (9). The thumb screw (15) having a threaded shank (43) and a knurled head (42) is inserted through the rail (3) into the treaded insert (7) located within the base (9). The connection further comprises a rubber washer (16). Fig. 10 illustrates the same attachment arrangement but from the opposite side of the base (9) of the microphone suspension device (2). Fig. 11 is another embodiment illustrating attachment of the microphone suspension device (2) to the rail (3) further comprising the fixture (17) and auxiliary nut (45) within the fixture (17). Moreover, the thumb screw (15) further comprises a reduced shank section (44).

Fig. 12 is an enlarged view of a section A-A from Fig. 7 excluding everything except a part of the microphone suspension device (2) comprising the base (9), sliding tabs (10) on both side of the tab (9) and the hole (34) with the slot (30).

Fig. 13 is a front view of a gripper (6). Fig. 14 is a cross-section view of the gripper (6) along line B-B as seen in Fig. 13. The gripper (6) comprises an outer annular cylinder (25), an intermediate annular cylinder (26) and an inner annular cylinder (27) having the microphone contact surface (24). The inner concentric annular cylinder (27) covers the microphone receivers (12) of both microphone holders (5) so that receivable and holdable microphone (4) is in contact with the inner annular cylinder (27) of the gripper (6), and wherein each cylinder (25; 26; 27) has a gripper cut-out (28) for reception of the microphone (4) there through. The intermediate annular cylinder (26) comprises holes (46) to receive pegs (47) of the microphone receiver (12).

Fig. 15 illustrates changes of cross-section of the curved arm (11) along its curved path (36). The cross section of the curved arm (11) changes along its path (36) from an irregular five-sided polygon (37) at the horizontal base edge (50) of the base (9) of the microphone holder (5) to an apex (38) and further to an oval profile (39) that merges with the microphone receiver (12).

### References:

1 - a microphone suspension assembly;
2 - a microphone suspension device;
3 - a rail;
4 - a microphone;
5 - a microphone holder;
6 - a gripper;
7 - a threaded insert;
8 - a flat surface of a base;
9 - a base;
10 - a sliding tab;
11 - a curved arm;
12 - a microphone receiver;
13 - a wide angle;
14 - an acute angle;
15 - a thumb screw;
16 - a washer;
17 - a fixture;
19 - a rail slot;
20 - a longitudinal axis of a rail;
21 - a protective metal mesh of a microphone;
22 - a microphone capsule;
23 - a connector of a microphone;
24 - a microphone contact surface;
25 - an outer annular cylinder;
26 - an intermediate annular cylinder;
27 - an inner annular cylinder;
28 - a gripper cut-out;
29 - a longitudinal axis of microphone to be placed into the microphone holder;
30 - a slot of a base;
32 - a threaded hole of a threaded insert;
33 - an outer surface of a base;
34 - a hole formed between two assembled bases;
35 - a plane along which a curved arm is curved
36 - a path of an arm;
37 - a five sided polygon of a cross section of a curved arm;
38 - an apex;
39 - an oval profile of a cross section of an arm;
41 - a flat surface of a microphone receiver;
42 - a knurled head;
43 - a threaded shank;
44 - a reduced shank section;
45 - an auxiliary nut;
46 - a hole of a intermediate annular cylinder;
47 - a peg of a microphone receiver;
48 - a general direction perpendicular to a longitudinal axis of a rail;
49 - an opening angle;
50 - a horizontal base edge of a base;
51 - a slot; and
52 - a ring cut out.

## Claims

1. The microphone suspension device (2) comprising:
- a set of two microphone holders (5), wherein each microphone holder (5) comprises a base (9), two curved arms (11) extending from the base (9) and a microphone receiver (12) attached to the curved arms (11), wherein a plane (35) along which the one curved arm (11) is curved is at a wide angle (13) in relation to a plane (35) along which the second curved arm (11) of the same one microphone holder (5) is curved, and wherein the plane (35) along which the one curved arm (11) is curved is at an acute angle (14) in relation to the plane (35) along which the second curved arm (11) of the adjacent microphone holder (5) is curved; and
- a gripper (6) arranged between the two microphone receivers (12) of the two microphone holders (5).

2. The microphone suspension device (2) according to claim 1, wherein the gripper (6) comprises an intermediate annular cylinder (26) and an inner annular cylinder (27), wherein the inner concentric annular cylinder (27) covers the microphone receivers (12) of both microphone holders (5) so that receivable and holdable microphone (4) is in contact with the inner annular cylinder (27) of the gripper (6), and wherein each cylinder (26; 27) has a gripper cut-out (28) for reception of the microphone (4) therethrough.

3. The microphone suspension device (2) according to claim 1 or 2, wherein the wide angle (13) is in a range of 170 to 92 degrees, 170 to 100 degrees, 170 to 120 degrees, 160 to 140 degrees and 155 to 145 degrees.

4. The microphone suspension device (2) according to any one of claim 1 to 3, wherein the acute angle (14) is in a range of 88 to 10 degrees, 80 to 10 degrees, 60 to 10 degrees, 40 to 20 degrees and 35 to 25 degrees.

5. The microphone suspension device (2) according to any one of claim 1 to 4, wherein the device (2) comprises a threaded insert (7) arranged between the two bases (9) of the two microphone holders (5) so that the two bases (9) of the two microphone holders (5) enclose the threaded insert (7).

6. The microphone suspension device (2) according to any one of claim 1 to 5, wherein the gripper (6) comprises an outer annular cylinder (25) extending from the inner annular cylinder (27) of the gripper (6).

7. The microphone suspension device (2) according to any one of claim 1 to 6, wherein the base (9) and arms (11) are made of plastic, plastic elastomer or similar material that retains elastic deformation.

8. The microphone suspension device (2) according to any one of claim 1 to 7, wherein a cross section of the curved arm (11) changes along its path (36) starting from a horizontal base edge (5) of the base (9) as an irregular five-sided polygon (37) till an oval profile (39) that further merges with the microphone receiver (12).

9. The microphone suspension device (2) according to any one of claim 1 to 8, wherein the base (9), two curved arms (11) and the microphone receiver (12) are an integral part.

10. The microphone suspension device (2) according to any one of claim 1 to 9, wherein the set of two microphone holders (5) is an integral part.

11. The microphone suspension device (2) according to any one of claim 1 to 10, wherein each arm (11) is curved in one direction.

12. The microphone suspension device (2) according to any one of claim 1 to 11, wherein the gripper (6) is made of a rubber or plastic material of low shore hardness in a range of 20A shore to 70A shore.

13. The microphone suspension device (2) according to any one of claim 1 to 12, wherein the microphone receiver (12) is in a form of a ring having a ring cut-out (52), wherein one end of the ring is attached to the one arm (11) of the microphone holder (5) and another end of the ring is attached to another arm (11) of the same microphone holder (5).

14. The microphone suspension device (2) according to any one of claim 1 to 13, wherein the gripper cut-out (28) coincides with the ring cut out (52) of a microphone receiver (12).
